# NEUE EUROPÄISCHE PATENTSCHRIFT

(11) **EP 1 027 144 B2**
(45) Veröffentlichungstag und Bekanntmachung des Hinweises auf die Entscheidung über den Einspruch: **08.02.2006**
(45) Hinweis auf die Patenterteilung: 10.07.2002
(21) Anmeldenummer: 98952663.7
(22) Anmeldetag: 29.09.1998
(51) Int. Cl.: B01J 2/04, F25C 1/00, A23L 3/375

(54) **VERFAHREN ZUM ABKÜHLEN UND ZERSTÄUBEN VON FLÜSSIGEN ODER PASTÖSEN STOFFEN**
METHOD FOR COOLING AND ATOMIZING LIQUID OR PASTE-LIKE SUBSTANCES
PROCEDE PERMETTANT DE REFROIDIR ET DE PULVERISER DES MATERIAUX FLUIDES OU PATEUX

(30) Priorität: 31.10.1997 DE 19748069
(43) Veröffentlichungstag der Anmeldung: 16.08.2000
(73) Patentinhaber: Air Liquide Deutschland GmbH, 40235 Düsseldorf (DE)
(72) Erfinder: BERGER, Thomas, D-45219 Essen (DE); LINGLER, Klaus, D-41238 Mönchengladbach (DE); BÜSCHKENS, Guido, D-47802 Krefeld (DE); NOBIS, Peter, D-41469 Neuss (DE)
(74) Vertreter: Kahlhöfer, Hermann
(86) Internationale Anmeldenummer: PCT/EP1998/006177
(87) Internationale Veröffentlichungsnummer: WO 1999/022855

(56) Entgegenhaltungen:
- EP-A- 0 731 326
- WO-A-95/01221
- WO-A-96/19922
- GB-A- 2 146 943
- PATENT ABSTRACTS OF JAPAN vol. 009, no. 059 (C-270), 15. März 1985 & JP 59 196701 A (ISHIKAWAJIMA HARIMA JUKOGYO KK), 8. November 1984

## Beschreibung

Die Erfindung betrifft ein Verfahren zum Abkühlen und Zerstäuben von flüssigen oder pastösen Stoffen.

Kühlprozesse werden zur Änderung der Produkteigenschaften von Stoffen eingesetzt. Die zu kühlenden Stoffe werden in der Regel in Apparaturen behandelt, deren Kühlwirkung auf Wärmeübertragungs-Prozessen zwischen einem Kühlmittel und dem zu kühlenden Stoff an Kühlflächen beruht. Der Wärme- bzw. Kältetransport zwischen Kühlmittel und dem zu kühlenden Stoff ist daher nur indirekt. Eine oft geforderte relativ schnelle Abkühlung der Stoffe ist hiermit nicht zu erreichen. Diese Kühlverfahren sind ebenfalls oft nicht geeignet zur Durchführung einer Kristallisation oder zum Gefrieren, da sich isolierende Ablagerungen auf den Kühlflächen bilden, die den Kühlprozeß beeinträchtigen können. Derartige Kühlprozesse sind zum Beispiel in Römpp Chemielexikon und Pahlmann, Taschenbuch der Kältetechnik beschrieben.

Weiterhin ist bekannt, daß in großtechnischem Maßstab Sprühtürme zur Herstellung von pulverförmigen Produkten bei Einsatz von konventioneller Kälte eingesetzt werden.

Cryogene Kühl- und Gefrierverfahren, bei denen tiefkalte Gase eingesetzt werden, sind ebenfalls Stand der Technik. Aus Römpp Chemielexikon und Pahlmann, Taschenbuch der Kältetechnik sind beispielsweise Verfahren bekannt, bei denen die zu kühlenden Stoffe mit dem Kältemittel, insbesondere mit flüssigem Stickstoff oder mit festem Kohlendioxid in Form von Trockeneis oder Schnee, besprüht werden. Der direkte Kontakt des Kältemittels mit den Stoffen führt zu einer wesentlich schnelleren Abkühlung der Stoffe als bei den zuvor genannten konventionellen Verfahren. Für eine relativ rasche Abkühlung flüssiger oder pastöser Stoffe ist auch dieses Verfahren ungeeignet, da die Abkühlung im innem der Stoffe durch den Wärmetransport durch den Stoff selbst bestimmt wird und die Kontaktflächen für eine schnelle Abkühlung, beispielsweise zur Kristallisation, noch zu klein sind. Die Herstellung von leicht dosierbaren, rieselfähigen Stoffen ist mit diesen Verfahren kaum möglich.

Durch das Cryopel® Verfahren, beschrieben in US 4,967,571, das Cryobreak® Verfahren, beschrieben in DE 4419 010 C1 sowie das Cryofals® Verfahren, beschrieben in DE 43 29 110 C1, sind Verfahren bekannt, bei denen flüssige Stoffe durch das Eintropfen in flüssigen Stickstoff sehr rasch abgekühlt werden. Dieser Kühlprozeß kann zu einem dosierfähigen, pelletierten Stoff führen. Die sich einstellenden Partikelgrößen liegen meist im Bereich von einigen Millimetern. Die Abkühlung erfolgt immer auf die Temperatur des flüssigen Stickstoffs von ca. 77 K, was bei einer Vielzahl von Anwendungen nicht nötig oder sogar unerwünscht ist.

Ferner ist eine Vorrichtung bekannt, bei der unter Verwendung von Zweistrahldüsen ein flüssiger Stoff mit flüssigem Stickstoff in Kontakt gebracht wird, um den Stoff rasch abzukühlen. Dabei ergibt sich der Nachteil, daß das Produkt bereits durch den tiefkalten Stickstoff in der Düse abkühlen und diese verstopfen kann. Aus der WO 95/21688 ist ein Verfahren bekannt, bei dem ein kompressibles Fluid in eines Substanz oder Substanz-mischung untes Druck aufgelöst und die erhaltene Lösung entspannt wird wobei sich beim Entspannen Partikel bilden.

Aufgabe der Erfindung ist es, ein Verfahren zu schaffen, mit dem die Nachteile des Standes der Technik überwunden werden und mit dem eine relativ schnelle Abkühlung und Zerstäubung flüssiger oder pastöser Stoffe möglich ist, wobei insbesondere auch relativ kleine Mengen der flüssigen oder pastösen Stoffe auf wirtschaftlich Weise abgekühlt und zerstäubt werden können.

Die Aufgabe wird durch ein Verfahren gelöst, bei dem flüssige oder pastöse Stoffe oder Stoffgemische abgekühlt und zerstäubt werden, in dem der flüssige oder pastöse Stoff/Stoffgemisch mit flüssigem oder überkritischem Kohlendioxid in einer Zuzistoffdüst zusammengeführt wird und anschließend das Gemisch aus flüssigem oder pastösem Stoff/Stoffgemisch und flüssigem oder überkritischem Kohlendioxid entspannt wird. Das Verfahren wird so geführt, daß sich das Gemisch aus flüssigem oder pastösem Stoff/Stoffgemisch und flüssigem oder überkritischem Kohlendioxid erst beim Austritt aus der Vorrichtung zum Entspannen entspannt. Durch dieses Verfahren wird ein sehr direkter Kontakt des flüssigen oder pastösen Stoffes/Stoffgemisches mit dem flüssigen oder überkritischen Kohlendioxid erreicht. Der durch die Entspannung entstehende KohlendioxidSchnee (Joule-Thompson-Effekt) bzw. das gasförmige Kohlendioxid weist eine Temperatur von ca. 195 K auf, wodurch eine rasche, schlagartige Abkühlung des flüssigen oder pastösen Stoffes/Stoffgemisches erfolgt.

Bei der Entspannung entstehen relativ kleine Partikel des flüssigen oder pastösen Stoffes/Stoffgemisches. Dies führt zu einem feinteiligen, relativ gut rieselfähigen und damit relativ gut dosierbarem Produkt aus dem flüssigen oder pastösen Stoff/Stoffgemisch. Ein weiterer Vorteil des erfindungsgemäßen Verfahrens ist es, daß durch Variation der Mengenverhältnisse von Stoffen/Stoffgemischen und flüssigem oder überkritischen Kohlendioxid die sich einstellende Endtemperatur in weiten Bereichen zu beieinflussen ist.

Es ist vorgesehen, daß das flüssige oder überkritische Kohlendioxid einen Druck von 5 bis 500 bar /und eine Temperatur von 216 bis 373 K, vorzugsweise einen Druck von 10 bis 200 bar und eine Temperatur von 230 bis 323 K und besonders bevorzugt einen Druck von 15 bis 80 bar und eine Temperatur von 248 bis 313 K, aufweist. Dadurch ergibt sich der Vorteil, daß bei einem bevorzugten Druck- und Temperaturbereich das Kohlendioxid direkt den Versorgungsanlagen, wie zum Beispiel Niederdruck- und Mitteldruck-Tanks oder Kohlendioxid-Flaschen direkt ohne weitere Gasaufbereitung entnommen werden kann.

Erfindungsgemäß erfolgt die Entspannung des Gemisches aus flüssigem oder pastösem Stoff/Stoffgemisch und flüssigem oder überkritischem Kohlendioxid auf einen Druck zwischen 0 bis 60 bar, vorzugsweise auf einen Druck zwischen 0 bis 20 bar und besonders bevorzugt auf ca. 1 bar. Die Entspannung auf Atmosphärendruck (ca. 1 bar) weist den Vorteil auf, daß direkt in offene Systeme abgefüllt werden kann und der jeweils mögliche Kälteinhalt des Kohlendioxids maximal ausgenutzt wird.

Nach der Erfindung kann bzw. können der flüssige oder pastöse Stoff/Stoffgemisch und/oder das flüssige oder überkritische Kohlendioxid und/oder das Gemisch aus flüssigem oder pastösem Stoff/Stoffgemisch und flüssigem oder überkritischem Kohlendioxid mindestens einer temperierbaren Leitung zugeführt werden. Mit Hilfe einer temperierbaren Leitung kann vorteilhaft die Temperaturfür das flüssige oder pastöse Stoff/Stoffgemisch und/oder das flüssige oder überkritische Kohlendioxid und/oder das Gemisch aus flüssigem oder pastösem Stoff/Stoffgemisch und flüssigem oder überkritischem Kohlendioxid geregelt werden, um die gewünschte oder erforderliche Prozeßtemperatur einzustellen.

Nach der Erfindung erfolgt das Mischen des flüssigen oder pastösen Stoffes/Stoffgemisches mit dem flüssigen oder überkritischen Kohlendioxid direkt in einer Zweistoffdüse zur Entspannung des Gemisches aus flüssigem oder pastösem Stoff/Stoffgemisch und flüssigem oder überkritischem Kohlendioxid. Das Mischen direkt in einer Zweistoffdüse zur Entspannung des Gemisches aus flüssigem oder pastösem Stoff/Stoffgemisch und flüssigem oder überkritischem Kohlendioxid ist vorteilhaft, da hier kein direkter Kontakt des flüssigen oder pastösen Stoff/Stoffgemisch mit Kohlendioxid vor der Entspannung erfolgt und daherbeide Temperaturen unabhängig voneinander einstellbar sind.

Das efindungsgemäße Verfahren kann vorteilhaft zum Homogenisieren, Pulverisieren, Pelletieren, Granulieren, Kristallisieren, Ausfällen, Gefriertrocknen oder Aufschließen von Zellen, verwendet werden. Die Verwendung zum Pulverisieren, Pelletieren, Granulieren und Kristallisieren ist bevorzugt.

Beispielsweise kann mit dem erfindungsgemäßen Verfahren ein Fettpulver oder ein kristallines, wässriges Produkt vorteilhaft hergestellt werden.

Das efindungsgemäße Verfahren ist besonders geeignet zur Herstellung von Produkten, die aus einem Gemisch verschiedener Stoffe bestehen. So können beispielsweise Fettpulver mit Zusatzstoffen, zum Beispiel Mehl, hergestellt werden.

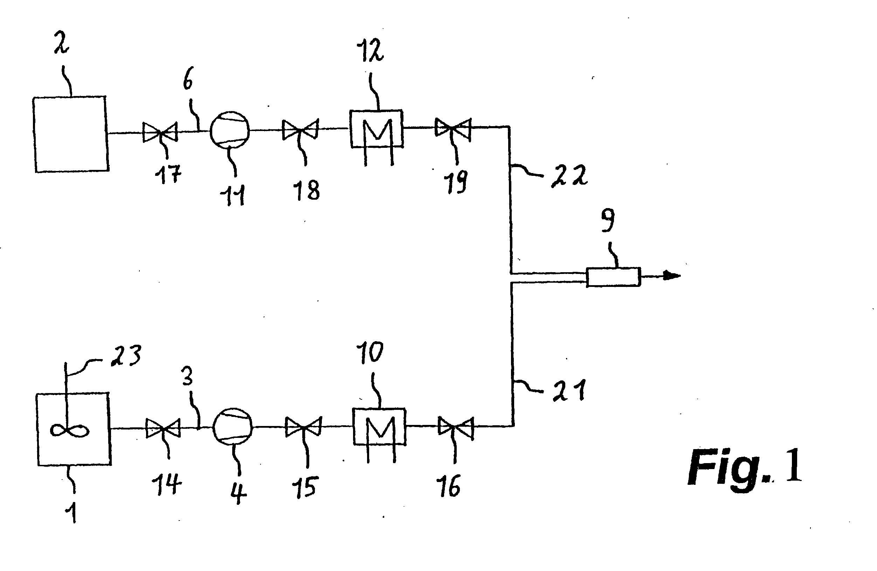

Das erfindungsgemäße Verfahren wird nun anhand der Fig.1.

In Fig. 1 ist eine Vorrichtung zum Abkühlen von flüssigen oder pastösen Stoffen oder Stoffgemischen dargestellt.

Die in Fig. 1 dargestellte Vorrichtung zum Abkühlen von flüssigen oder pastösen Stoffen oder Stoffgemischen weist einen Vorratsbehälter 1 für den flüssigen oder pastösen Stoff/Stoffgemisch und eine Quelle 2 für flüssiges Kohlendioxid auf. In dem Vorratsbehälter 1 kann ein Rührer 23 angeordnet sein. Die Quelle 2 kann beispielsweise eine Steigrohflasche oder ein Tank für flüssiges Kohlendioxid sein. Ober eine Leitung 3 und eine Pumpe 4 werden die Volumenströme des flüssigen oder pastösen Stoffes/Stoffgemisches und des flüssigen Kohlendioxides über eine Leitung 210 und 22 der Vorrichtung 9 zur Entspannung des Gemisches zugeführt werden, wodurch diese erst in der Vorrichtung 9 zur Entspannung des Gemisches zusammengeführt werden. Gegebenenfalls kann zusätzlich die Leitung 3 temperierbar sein, beispielsweise mit Hilfe einer Rohrleitungsheizung 10, um die Temperatur des flüssigen oder pastösen Stoffes/Stoffgemisches auf einen bestimmten Wert einzustellen. Zusätzlich kann in der Leitung 6 eine Pumpe 11 zur Förderung des flüssigen Kohlendioxids und/oder ein Vorrichtung zum Temperieren, beispielsweise eine Rohrleitungsheizung- oder Kühlung 12, zur Regelung der Temperatur des flüssigen Kohlendioxids angeordnet sein. Ferner sind in den Leitungen 3,6 noch ventile 14, 15, 16, 17, 18, 19 und 20 angeordnet, um die Volumenströme zu regeln.

## Patentansprüche

1. Verfahren zum Abkühlen und Zerstäuben von flüssigen oder pastösen Stoffen oder Stoffgemischen, bei dem ein flüssiger oder pastöser Stoff/Stoffgemisch mit flüssigem oder überkritischem Kohlendioxid in einer Zweistoffdüse zusammengeführt wird und anschließend das Gemisch aus flüssigem oder pastösem Stoff/Stoffgemisch und flüssigem oder überkritischem Kohlendioxid entspannt wird, wodurch eine Abkühlung und Zerstäubung des Stoffs/Stoffgemischs erfolgt.

2. Verfahren nach Anspruch 1,
bei dem das flüssige oder überkritische Kohlendioxid einen Druck von 10 bis 200 bar und eine Temperatur von 230 bis 323 K aufweist.

3. Verfahren nach Anspruch 2,
bei dem das flüssige oder überkritische Kohlendioxid einen Druck von 15 bis 80 bar und eine Temperatur von 248 bis 313 K aufweist.

4. Verfahren nach einem der Ansprüche 1 bis 3,
bei dem die Entspannung des Gemisches aus flüssigem oder pastösem Stoff/Stoffgemisch und flüssigem oder überkritischem Kohlendioxid auf einen Druck zwischen 0 bis 20 bar erfolgt.

5. Verfahren nach Anspruch 4,
bei dem die Entspannung des Gemisches aus flüssigem oder pastösem Stoff/Stoffgemisch und flüssigem oder überkritischem Kohlendioxid auf einen Druck von ca. 1 bar erfolgt.

6. Verfahren nach einem der Ansprüche 1 bis 5,
bei dem der flüssige oder pastöse Stoff/Stoffgemisch und/oder das flüssige oder überkritische Kohlendioxid und/oder das Gemisch aus flüssigem oder pastösem Stoff/Stoffgemisch und flüssigem oder überkritischem Kohlendioxid mindestens einer temperierbaren Leitung zugeführt wird bzw. werden.

7. Verwendung des Verfahrens nach Anspruch 1 zum Pulverisieren, Pelletieren, Granulieren und Kristallisieren.

8. Verwendung des Verfahrens nach Anspruch 1 zur Herstellung von Fettpulvern.

## Claims

1. Process for cooling and atomizing liquid or pasty substances or mixtures of substances in which a liquid or pasty substance/mixture of substances is brought together with liquid or supercritical carbondioxyd in a dual-component nozzle and in which subsequently the mixture of liquid or pasty substance/mixture of substances and fluid or supercritical carbon dioxide is expended as a result of which the substance/mixture of substances is cooled and atomized.

2. Method according to claim 1 in which the liquid or supercritical carbon dioxide comprises a pressure of 10 to 200 bar and a temperature of 230 to 323 K.

3. Method according to claim 2 in which the liquid or supercritical carbon dioxide comprizes a pressure of 15 to 80 bar and a temperature of 248 to 313 K.

4. Method according to one of claims 1 to 3 in which the mixture of liquid or pasty substance/mixture of substances and liquid or supercritical carbon dioxide is expanded to a pressure between 0 and 20 bar.

5. Method according to claim 4 in which the mixture of liquid or pasty substance/mixture of substances and liquid or supercritical carbon dioxide is expanded to a pressure of approximately 1 bar.

6. Method according to one of claims 1 to 5 in which the liquid or pasty substance/mixture of substances and/or the liquid or supercritical carbon dioxide and/or the mixture of liquid or pasty substance/mixture of substances and liquid or supercritical carbon dioxide is or are fed to at least one heatable and/or coolable line.

7. Use of the method according to claim 1 for pulverizing, pelleting, granulating and chrystalizing.

8. Use of a method according to claim 1 for the production of fat powders.

## Revendications

1. Procédé pour refroidir et pulvériser des matériaux ou des mélanges de matériaux liquides ou pâteux, dans lequel un matériau/mélange de matériaux liquide ou pâteux est réuni avec du dioxyde de carbone liquide ou supercritique dans une buse à composants binaires et dans lequel le mélange de matériau/mélange de matériaux liquide ou pâteux et de dioxyde de carbone liquide ou supercritique est détendu ensuite, par quel moyen le matériau/mélange de matériaux est refroidi et pulvérisé.

2. Procédé selon la revendication 1, dans lequel le dioxyde de carbone liquide ou supercritique a une pression de 10 à 200 bar et une température de 230 à 323 K.

3. Procédé selon la revendication 2, dans lequel le dioxyde de carbone liquide ou supercritique a une pression de 15 à 80 bar et une température de 248 à 313 K.

4. Procédé selon l'une des revendications 1 à 3, dans lequel la détente du mélange de matériau/mélange de matériaux liquide ou pâteux et de dioxyde de carbone liquide ou supercritique est effectuée jusqu'à une pression entre 0 à 20 bar.

5. Procédé selon la revendication 4, dans lequel la détente du mélange de matériau/mélange de matériaux liquide ou pâteux et de dioxyde de carbone liquide ou supercritique est effectuée jusqu'à une pression d'environ 1 bar.

6. Procédé selon l'une des revendications 1 à 5, dans lequel le matériau/mélange de matériaux liquide ou pâteux et/ou le dioxyde de carbone liquide ou supercritique et/ou le mélange de matériau/mélange de matériaux liquide ou pâteux et de dioxyde de carbone liquide ou supercritique est ou sont alimentés dans au moins une conduite pouvant être tempérée.

7. Utilisation du procédé selon la revendication 1 pour la pulvérisation, la pelletisation, la granulation et la cristallisation.

8. Utilisation du procédé selon la revendication 1 pour produire des poudres de graisse.
